# EUROPEAN PATENT APPLICATION

(11) **EP 4 505 853 A1**
(43) Date of publication of application: **12.02.2025**
(21) Application number: 23191012.6
(22) Date of filing: 11.08.2023
(51) Int. Cl.: A01C 15/00, A01C 15/02, A01C 17/00, B65D 83/06

(54) **ASSEMBLY AND METHOD FOR SPREADING A GRANULAR MATERIAL**

(71) Applicant: Rendapart, 9300 Aalst (BE)
(72) Inventor: KRAUCH, Pieter, 1790 Affligem (BE)
(74) Representative: Gevers Patents

(57) **Abstract**

The disclosure pertains to an assembly (1) and method for spreading a granular material, the assembly (1) comprising: a recloseable packaging container (11) for granular materials, provided with a dispensing opening (90), formed by an ensemble of a tab (72) and a second tongue (83), which dispensing opening (90) is openable and recloseable; and a wheeled spreader unit (100), said spreader unit (100) containing: a frame (110); a container holder (170) mounted on said frame (110) for receiving and maintaining said packaging container (11) in a predetermined position, enabling the outflow of granular material from said opened dispensing opening (90), through an opening (176) in said container holder (170) coinciding with said dispensing opening (90) of said packaging container (11), when placed upon the container holder (170); a base hopper (120); and an impeller (150).

## Description

### FIELD OF THE INVENTION

The present invention relates to the field of granular material spreaders and containers for containing such granular material. The present invention further relates to a method for use in same and to the use of containers for spreading such material.

### BACKGROUND OF THE INVENTION

For some time now, material spreaders have been used in garden maintenance for fertilizing lawns or for spreading grass seeds or herbicide granules, among other things. Most material spreaders contain a hopper in which a granular material, such as a granular fertilizer or grass seeds or other, is tipped. The hopper may be quite bulky and is typically supported by a frame, which frame is mounted on one wheel or a pair of ground engaging wheels. The hopper is further typically provided with an opening allowing the granular material to pass onto an impeller or rotatable disc, wherein the shape of the opening defines the flow rate. An axle between said wheels typically transmits power to a shaft, onto which said impeller is mounted and which shaft rotates said impeller upon movement of the material spreader.

Typically, material spreaders that are currently on the market are hefty, mainly due to the volume of their hoppers, which are designed for holding a lot of material. Many material spreaders are therefore robustly designed, with a solid frame, making them cumbersome to handle and voluminous to store. Due to their robust design, material spreaders represent a significant investment for the homeowner, even though they are typically used by homeowners on only a limited number of occasions, meaning only a few times a year, e.g. for spreading fertilizer on a lawn.

The use of material spreaders having a hopper further requires users to handle and tilt or tip relatively unwieldy granular material bags for feeding the hopper with granular material. After finishing the spreading work, they must further empty any residual granular material by scooping it again from the hopper into the bags or by spreading it with the risk of locally over-fertilize a piece of land. Many homeowners view this method as a nasty and discouraging chore.

US 3,856,211 describes a small material spreader having a structure to receive a box with rupturable wall portions, wherein an aperture in the box is made for discharge of material as it is placed on the spreader. For this purpose, the box is plugged onto a spreader unit and will ride on the spreader unit until the contents are completely distributed. The spreader unit, also designated as a "saddle" in the document, incorporates a box-opening knife for easy opening of the box during the act of placing the box in the saddle. The user does not need to open the box and pour the contents; the user rather simply plugs the box onto the spreader and walks the material spreader around. When finishing the spreading task, and if there is still material left in the box, the user simply removes the box and subsequently stores it upside down in a garage or storage area until it is needed for a next time.

By essentially using the box for a hopper, US 3,856,211 aims at making the material spreader lighter. For the purpose of a box-opening knife, a piece of bent strap metal is welded to the saddle side wall, with its sharpened free end extending forward and inclined about 20° away from the side wall. When inserting a carton box into the saddle, a flap is cut into the wall of the carton and pushed inside of the carton, permitting flow of material from the carton.

As a consequence to the design of the material spreader of US 3,856,211, the box has a permanent tear, with a flap turned inside of the carton. As already mentioned, the box is to be stored upside down in a storage room in order to avoid the continuous flow of granular material out of the box. Due to the permanent tear in the box, the contents are also no longer sealed off from outside conditions such as moist and may further attract flies and other insects. Rats may also be attracted to the granular material in the box, for example when the granular material concerns fertilizer, comprising elements such as fish bone meal. Pulling out the flap of cardboard material from the inside of the box is a cumbersome task and would still require the application of an adhesive seal or tape or the like for closing off the contents of the box from the outside world.

Furthermore, pulling out the box according to US 3,856,211 from the saddle unit would unavoidably be associated with losing a certain amount of granular material, which would fall in the small subsidiary hopper or even on the ground. The box being often removed while being on a lawn or near shrubs or other decorative plants, the latter situation is to be avoided, especially if a compound such as a cyanamide is used as part of the granular material, which can "burn" the lawn or other plants when in contact.

Based on the above, there is therefore a need for a practical material spreader of granular materials, providing for an improved storing of the box's contents after one or multiple uses, and for an improved manipulation of the granular material spread and flow, and wherein the loss of granular material after use of the spreader is largely avoided.

### SUMMARY OF THE INVENTION

The inventors have surprisingly found that the assembly and method according to the present invention fulfills the above mentioned needs and overcomes the above mentioned disadvantages.

In an aspect of the present invention, there is provided an assembly for spreading a granular material, the assembly comprising:
- a recloseable packaging container for granular materials, obtained from a blank having a rectangular surface divided in four adjacent rectangular zones intended to form the side walls of the container, wherein one of the corners of said packaging container is provided with a dispensing opening, formed by an ensemble of a tab which is part of a side wall formed by one of said rectangular zones and a second tongue which is part of the lower flap connected to said side wall formed by said rectangular zone, which dispensing opening is openable and recloseable; and
- a wheeled spreader unit, said spreader unit containing:
   - a frame, mounted on a pair of ground-engaging wheels;
   - a container holder mounted on said frame for receiving and maintaining said recloseable packaging container in a predetermined position, enabling the outflow of said granular material from an opened dispensing opening in said packaging container, through an opening in said container holder which opening coincides with the position of said dispensing opening of the packaging container, when placed upon the container holder;
   - a base hopper, for collecting said outflow of said granular material and for regulating the flow of granular material via at least one hole in said base hopper, said base hopper being positioned below said container holder; and
   - an impeller for receiving said flow of granular material via said at last one hole, said impeller being configured to spread said granular material to the environment.

It is an advantage of the assembly according to the invention that granular materials can be provided from the packaging container to the spreader unit in such a way, that no excess granular material is spread over a parcel of land that needs to be treated. Indeed, by providing an openable and recloseable dispensing opening in the packaging container, in combination with a container holder having an opening for allowing the outflow of granular material, the user can decide on the amount of granular material that he or she wants to spread. The granular material will only start flowing into the base hopper, after placing the packaging container in a correct way into the container holder and opening the dispensing opening. When the user closes the dispensing opening, granular material will however no longer be distributed into the base hopper. As a consequence, no excess material will be spread over a lawn or parcel of land, thereby avoiding over-fertilization or overtreatment.

It is a further advantage that said packaging container is recloseable, so that it can be stored safely in, e.g. a garage or garden shed, making it out of reach for flies and other insects, without having to pick any torn cardboard material out of the inside of a box and without having to apply any tape to the container.

In embodiments of the assembly according to the invention, a glue flap extends laterally from the side of rectangular zone, said glue flap having a total length L, and further having a first portion with a width A and extending along a length C, and a second portion adjacent to said first portion, having a width B, wherein B is greater than A; and wherein a reinforcement flap extends from the lower side of the second portion of said glue flap, for the purpose of being connected to a lower flap upon folding the packaging container.

It is an advantage of said embodiment that said glue flap and said reinforcement flap allow to securely connect the two extreme external rectangular zones, so that a robust recloseable packaging container is obtained, further allowing the formation of a dispensing opening.

In embodiments of the assembly according to the invention, said second portion contains a first cut-out for the purpose of creating said dispensing opening; and said tab is defined in said rectangular zone, wherein both zones or layers formed by said first cut-out and said tab, will be placed or positioned onto or on top of each other when folding the packaging container from said blank, said tab further having a width M and a length N, wherein said width M has a value which is smaller than said width B of said second portion and wherein said length N has a value which is smaller than the length (L-C) of said second portion, thereby defining a glue zone for the purpose of attaching or gluing the part of said second portion around said first cut-out to the inside of said rectangular zone upon formation of said packaging container.

It is an advantage of said embodiment that the packaging container can be made more robust by providing a double layer of side wall material around the dispensing opening of the packaging container.

In embodiments of the assembly according to the invention, said second tongue is not connected to the outward facing side of said reinforcement flap.

It will be understood that according to these embodiments, said second tongue is not glued, or permanently attached in any other way, to the outward facing side of said reinforcement flap.

In embodiments of the assembly according to the invention, said second tongue in said lower flap is provided to move slidably between said reinforcement flap and one of the lower flaps different than said lower flap having said second tongue.

It is an advantage of said embodiment that by accommodating said second tongue in a slidable way between a layer formed by said reinforcement flap and a layer formed by one of the lower flaps, a more robust dispensing opening can be created.

In an aspect of the present invention, there is provided a method for spreading a granular material on a surface, the method comprising the following steps:
a) providing a wheeled spreader unit, wherein said wheeled spreader unit comprises a container holder for removably accommodating a packaging container, said container holder further having an opening;
b) providing a recloseable packaging container, having a dispensing opening, formed by an ensemble of a tab which is part of one of the side walls of the container and a second tongue which is part of one of the lower flaps of said one of the side walls of the container;
c) placing said recloseable packaging container in said container holder of said spreader unit, wherein said dispensing opening coincides with said opening;
d) opening said dispensing opening and allowing the outflow of granular material from said packaging container onto a base hopper of said spreader unit;
e) pushing the assembly of said spreader unit and packaging container forward by use of a handle of the spreader unit;
f) allowing granular material to flow from said based hopper onto an impeller which impeller rotates during movement of the spreader unit.

In embodiments of the method according to the invention, the method further comprises the step of
g) closing said dispensing opening, thereby preventing the further outflow of granular material.

It is an advantage of said embodiment that the outflow of granular material can be interrupted without having to take the packaging container out of said container holder, thereby providing better control of the quantity of granular material distributed.

In embodiments of the method according to the invention, the method further comprises the step of
h) removing said closed packaging container from said container holder and storing said closed packaging container.

In embodiments of the method according to the invention, said impeller rotates in a clockwise direction, when said spreader unit is moved in a forward direction.

It is an advantage of said embodiment that the granular material can be projected forward by the impeller, away from the user.

For this purpose, said opening in said container holder and said dispensing opening in said recloseable packaging container, which coincide when placing said packaging container in said container holder, are typically situated towards the left of the wheeled spreader unit, as observed by the user when positioned behind the spreader unit, meaning behind or at the side of the handle while facing the spreader unit, as would be the case when moving or pushing the unit in its regular forward direction. Preferably, said base hopper has at least one hole which is situated underneath said dispensing opening. Preferably, said at least one hole in said base hopper is situated towards the left of the wheeled spreader unit.

In an aspect of the present invention, there is provided a use of a recloseable packaging container as described herein in an assembly with a wheeled spreader unit, for spreading a granular material on a surface.

### BRIEF DESCRIPTION OF THE DRAWINGS

Exemplary embodiments will now be described in more detail with respect to the drawings in which:
Fig. 1 is a plan view of a blank for obtaining the packaging container according to embodiments of the invention;
Fig. 2 is an enlarged view of Fig. 1, illustrating a detailed view of part of the blank of Fig. 1;
Fig. 3 is a perspective view of the exterior of the recloseable packaging container according to embodiments of the invention;
Fig. 4 is a perspective view of the interior of the recloseable packaging container according to embodiments of the invention;
Fig. 5 is a side view of a wheeled spreader unit according to embodiments of the invention;
Fig. 6 is a front view of a wheeled spreader unit according to embodiments of the invention;
Fig. 7 is a perspective view of a wheeled spreader unit according to embodiments of the invention;
Fig. 8 is a perspective view of a opened recloseable packaging container in a container holder, enabling outflow of granular materials, according to embodiments of the invention.

### DETAILED DESCRIPTION

In the context of the present invention, the term "comprising" should not be interpreted as excluding features or elements other than those explicitly mentioned. It should be construed as specifying the presence of the features or elements indicated, but does not exclude the presence or addition of one or more other features or elements. Thus, the scope of the expression "a method comprising steps A and B" should not be limited to methods consisting only of steps A and B. Similarly, a composition comprising components A and B should not be limited to compositions consisting only of components A and B. Accordingly, the terms "comprising" and "including" encompass the terms more restrictive "consisting essentially of" and "consisting of".

In the context of the present invention, if an element or component is said to be selected from a list of recited elements or components, it should be understood that the element or component can also be any one of the individual recited elements or components in said list, or can also be selected from a group consisting of any two or more of the explicitly listed elements or components.

An aspect of the invention relates to an assembly for spreading a granular material.

According to the invention, said assembly comprises a recloseable packaging container for containing granular materials as well as a wheeled spreader unit for spreading the granular materials of said recloseable packaging container over a surface or a parcel of land. It will be understood that said assembly is obtainable by combination of a separate recloseable packaging container and a separate wheeled spreader unit.

For the purpose of the invention, the term "packaging container" refers herein to a box or recipient configured to contain and store a granular material and to provide said granular material via an opening upon use of the container.

In embodiments according to the invention, said packaging container is made from a foldable material. Preferably, said packaging container is made from cardboard. Said cardboard may relate to all types known in the state of the art, including paperboard, and corrugated cardboard, such as single wall corrugated cardboard.

For the purpose of the invention, the term "granular material" refers herein to a particulate material. Typically, said granular material relates to a seed, a fertilizer, a herbicide, an insecticide, or any other particulate material used for treating a parcel of land.

In an aspect of the invention, there is provided an assembly (1) for spreading a granular material, the assembly 1 comprising:
- a recloseable packaging container 11 for granular materials, obtained from a blank 10 having a rectangular surface divided in four adjacent rectangular zones (21-24) intended to form the side walls of the container 11, wherein one of the corners of said packaging container 11 is provided with a dispensing opening 90, formed by an ensemble of a tab 72 which is part of a side wall formed by one of said rectangular zones (21-24) and a second tongue 83 which is part of the lower flap 54 connected to said side wall formed by said rectangular zone 24, which dispensing opening 90 is openable and closeable; and
- a wheeled spreader unit 100, said spreader unit 100 containing:
   - a frame 110, mounted on a pair of ground-engaging wheels 130a, 130b;
   - a container holder 170 mounted on said frame 110 for receiving and maintaining said recloseable packaging container 11 in a predetermined position, enabling the outflow of said granular material from an opened dispensing opening 90 in said packaging container 11, through an opening 176 in said container holder 170 which opening 176 coincides with the position of said dispensing opening 90 of the packaging container 11, when placed upon the container holder 170;
   - a base hopper 120, for collecting said outflow of said granular material and for regulating the flow of granular material via at least one hole 121 in said base hopper 120, said base hopper 120 being positioned below said container holder 170;
   - an impeller 150 for receiving said flow of granular material via said at last one hole 121, said impeller 150 being configured to spread said granular material to the environment.

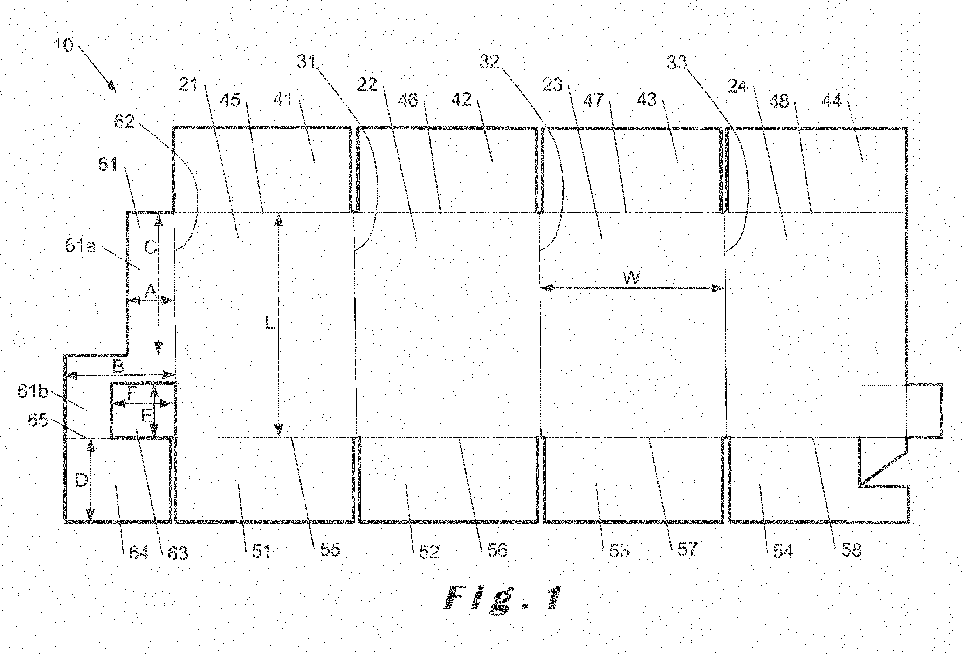

Referring now to Fig. 1, a blank 10 is shown for obtaining the recloseable packaging container 11 according to embodiments of the invention. The blank 10 has a substantially rectangular shape or surface, which comprises four substantially rectangular or rectangular zones 21,22,23,24, intended to form the side walls of the recloseable packaging container 11, which four rectangular zones 21,22,23,24 are separated from each other by score lines 31,32,33 respectively.

In embodiments, rectangular zones 21,22,23,24 visible in Fig. 1 relate to the exterior side walls of the recloseable packaging container 11.

For the purpose of the invention, the term "substantial" describes herein any deviation which is less than 10%, preferably less than 5%, more preferably less than 2.5% of described condition or value. Hence, it will be appreciated that a zone having an obtuse angle of less than 99° will still be considered herein as substantially rectangular zone, as such an angle relates to a deviation of less than 10% with regard to a right angle.

For the purpose of the invention, the term "blank" refers herein to a flat sheet of board that typically has been cut and scored, but not yet assembled into a box or container.

For the purpose of the invention, the term "score line" refers herein to an impression or crease in said blank, made to position and facilitate folds. A score line may also be obtained by cutting superficially in the blank, without cutting through the blank.

According to embodiments, at least two of the non-adjacent zones, e.g. 21 and 23, of the blank 10 have substantially a same width and form the smaller side walls or side panels of the container 11, whereas the zones 22,24 have a width which is greater than the width of zones 21 and 23, and form the larger side walls. In such embodiments, the container has a substantially rectangular cuboid or rectangular cuboid shape.

In preferred embodiments, said four rectangular zones (21-24), forming the four side walls of the container, have substantially a same width W.

In preferred embodiments, said four rectangular zones 21-24 have substantially a same width W and a length L, which length L is different from said width W, and wherein said length L is preferably greater than said width W. In such embodiments, the container 11 has a substantially square cuboid or square cuboid shape. In embodiments, said length L is at least 10% greater than said width W, preferably at least 20% greater, and most preferably at last 30% greater than said width W. It has advantageously been found that a recloseable packaging container 11 having a height greater than the width of one of its side panels is easier to manipulate in the assembly as claimed herein and is more stable for stacking. As further described here below, the length L of a rectangular zone 21-24 relates herein to the distance of one of the score lines 45,46,47,48 to its opposing score line 55,56,57,58, respectively, which upon folding of the blank 10 into container 11, coincides substantially with the height of the packaging container 11.

Alternatively, said at least four adjacent zones 21-24 are substantially square or square, wherein values for W and L are substantially equal or equal. In such embodiments, the container 11 has a substantially cube shape or cube shape.

In embodiments according to the invention, each of said at least one rectangular zones 21,22,23,24 has a width W which is at least 100mm, preferably at least 150mm, more preferably at least 200mm, and most preferably at least 250mm. It is further understood that each of said at least one rectangular zones 21,22,23,24 has a width W which is at most 600mm, preferably at most 550mm, more preferably at most 500mm, and most preferably at most 450mm.

Typically, said at least one rectangular zones 21,22,23,24 has a width W which is in between 150mm and 500mm, preferably in between 200mm and 400mm, and most preferably in between 250mm and 350mm. Preferably, said at least one rectangular zones 21,22,23,24 have a width W which is 280mm.

In embodiments according to the invention, each of said at least one rectangular zones 21,22,23,24 has a length L which is at least 150mm, preferably at least 200mm, more preferably at least 250mm, and most preferably at least 300mm. It is further understood that each of said at least one rectangular zones 21,22,23,24 has a length L which is at most 700mm, preferably at most 650mm, more preferably at most 600mm, even more preferably at most 550mm, and most preferably at most 500mm.

Typically, said at least one rectangular zones 21,22,23,24 has a length L which is in between 250mm and 550mm, preferably in between 300mm and 500mm, and most preferably in between 350mm and 450mm. Preferably, said at least one rectangular zones 21,22,23,24 has a length L which is 380mm.

It has advantageously been found that a recloseable packaging container 11 having the values for length L and width W for said rectangular zones 21-24 as described herein, are easy to stack and handle by the user. Indeed, the containers 11 with such dimensions generally represent a good compromise between having a container with a volume high enough to pack enough material for spreading while limiting the total weight of a filled container to an acceptable number.

In embodiments according to the invention, extending from the upper sides of the four rectangular zones 21,22,23,24 are the flaps 41,42,43,44 respectively, intended to form the top closure portion of the recloseable packaging container 11. Said flaps 41-44 may thus be referred to as upper flaps. Said four rectangular zones 21,22,23,24 are thereby separated from the respective flaps 41,42,43,44 by score lines 45,46,47,48, respectively. In embodiments according to the invention, extending from the lower sides of the four rectangular zones 21,22,23,24 are the flaps 51,52,53,54 respectively, intended to form the bottom closure portion of the recloseable packaging container 11. Said flaps 51-54 may thus be referred to as lower flaps. Said four rectangular zones 21,22,23,24 are thereby separated from the respective flaps 41,42,43,44 by score lines 55,56,57,58, respectively.

It will be understood that said flaps 41,42,43,44 at the upper sides of the rectangular zones 21-24 and the flaps 51,52,53,54 at the lower sides of the rectangular zones 21-24 are located opposite to each other, respectively, with respect to said corresponding rectangular zone 21-24.

According to preferred embodiments, said flaps 41-44 extending at one side of said rectangular zones 21-24 for forming the top closure portion of the container 11 when folded, extend from their respective rectangular zones 21-24 for a distance which substantially equals or equals half of the zone's width W. As a consequence, the free edges of the flaps 41-44 will join each other at the centre of the container 11 when folded, thus forming a seam. Alternatively, at least flaps 41 and 43, or, alternatively, at least flaps 42 and 44, extend for a distance which substantially equals or equals half of the zone's width W.

For the purpose of the invention, the term "seam" relates herein to the junction created by any free edge of a container flap or panel where it abuts or rests on another portion of the container and to which it may be fastened by tape, stitches or adhesive in the process of closing the container.

According to preferred embodiments, said flaps 51-54 extending at one side of said rectangular zones 21-24 for forming the bottom portion of the container, when folded, extend from their respective rectangular zones for a distance which substantially equals or equals half of the zone's width W. As a consequence, the free edges of the flaps will join each other at the centre of the container when folded, thus forming a seam. Alternatively, at least flaps 51 and 53, or, alternatively, at least flaps 52 and 54, extend for a distance which substantially equals or equals half of the zone's width W.

Thus, the blank 10 as illustrated in Figure 1 has a rectangular zone 21 having a flap 41 for forming the top closure portion of the recloseable packaging container 11, a flap 51 for forming the bottom closure portion of the recloseable packaging container 11 and a score line 31 which links said rectangular zone 21 to said adjacent rectangular zone 22.

The blank 10 as illustrated in Figure 1 further has a rectangular zone 22 having a flap 42 for forming the top closure portion of the recloseable packaging container 11, a flap 52 for forming the bottom closure portion of the recloseable packaging container 11 and a score line 32 which links said rectangular zone 22 to said adjacent rectangular zone 23.

The blank 10 as illustrated in Figure 1 further has a rectangular zone 23 having a flap 43 for forming the top closure portion of the recloseable packaging container 11, a flap 53 for forming the bottom closure portion of the recloseable packaging container 11 and a score line 33 which links said rectangular zone 23 to said adjacent rectangular zone 24.

The blank 10 as illustrated in Figure 1 further has a rectangular zone 24 having a flap 44 for forming the top closure portion of the recloseable packaging container 11, and a flap 54 for forming the bottom closure portion of the recloseable packaging container 11.

In embodiments according to the invention, a glue flap 61 extends laterally from the side opposite score line 31 of rectangular zone 21, which glue flap 61 is separated from said rectangular zone 21 by a score line 62. Score line 62 thus marks the transition between said glue flap 61 and said rectangular zone 21, just as score lines 45, 31 and 55 mark the transition between said rectangular zone 21 and upper flap 41, rectangular zone 22 and lower flap 51, respectively. It will be appreciated that glue flap 61 has the same length L as the four rectangular zones 21-24.

In embodiments, said glue flap 61 has a first portion 61a, having a width A, and a second portion 61b adjacent to said first portion 61a, having a width B, wherein B is greater than A. Said first portion 61a is situated at or towards the upper side of the zones 21-24, with respect to said second portion 61b. In other words, with respect to said first portion 61a, said second portion 61b is located nearer to or at the bottom closure portion of the recloseable packaging container 11.

Preferably, width A is at least 5mm, preferably at least 10mm, more preferably at least 15mm and most preferably at least 20mm. It will further be understood that width A is at most 50mm, preferably at most 45mm and most preferably at most 40mm. Typically, width A will be in the order of 30-35mm, preferably 35mm.

Preferably, width B is at least 30mm, preferably at least 40mm, more preferably at least 50mm and most preferably at least 60mm. It will further be understood that width A is at most 100mm, preferably at most 90mm, and most preferably at most 80mm. Typically, width B will be in the order of 70-75mm, preferably 70mm.

In embodiments, first portion 61a extends along a length C, which length C is at least 50%, preferably at least 60%, and most preferably at least 70% of the total length L of glue flap 61. It will further be understood that said length C is at most 95%, preferably at most 90%, and most preferably at most 85% of the total length L of glue flap 61. It has advantageously been found that these values for dimensions A,B and C for said first portion 61a and said second portion 61b, which together form glue flap 61, allow for the creation of a dispensing opening 90 with a desired or imposed flow rate, as will be described herein, while reducing the need for cardboard material and thus the weight of the container to a minimum.

In embodiments according to the invention, a reinforcement flap 64 extends from the lower side of the second portion 61b of said glue flap 61, for the purpose of being connected to flap 54 upon folding the packaging container. Such a connection may be obtained by stapling or gluing said reinforcement flap 64 to said flap 54. Score line 65 marks the transition between said second portion 61b of said glue flap 61 and said reinforcement flap 64. Preferably, said reinforcement flap 64 has the same width B as said second portion 61b.

In embodiments, said reinforcement flap 64 has a length D which is at least 30mm, preferably at least 40mm, more preferably at least 50mm, even more preferably at least 60mm and most preferably at least 70mm. It will further be understood that said reinforcement flap 64 has a length D which is at most 110mm, preferably at most 100mm, and most preferably at most 90mm. Typically, said reinforcement flap 64 has a length D which is in the order of 75-85mm, preferably 90mm. In embodiments, said reinforcement flap 64 has a substantially square shape or a square shape.

In embodiments according to the invention, said second portion 61b contains a first cut-out 63 for the purpose of creating said dispensing opening 90. Preferably, said first cut-out 63 has a substantially rectangular or rectangular shape. More preferably, said first cut-out 63 has a substantially square shape or a square shape. In embodiments, said first cut-out 63 has one side which corresponds with or is aligned with said score line 62, and an adjacent side which corresponds with or is aligned with said score line 65.

In embodiments, said first cut-out 63 has a length E which is at least 25mm, preferably at least 30mm, and most preferably at least 35mm. It will further be understood that said first cut-out 63 has a length E which is at most 80mm, preferably at most 70mm, and most preferably at most 60mm. Typically, said first cut-out 63 has a length E which is in the order of 40-50mm, preferably 45mm.

In embodiments, said first cut-out 63 has a width F which is at least 25mm, preferably at least 30mm, and most preferably at least 35mm. It will further be understood that said first cut-out 63 has a width F which is at most 80mm, preferably at most 70mm, and most preferably at most 60mm. Typically, said first cut-out 63 has a width F which is in the order of 40-50mm, preferably 45mm.

It will be appreciated by the skilled person that first cut-out 63, being entirely situated in said second portion 61b, has a length E and a width F which are smaller than the length (L-C) and the width B, respectively, of said second portion 61b.

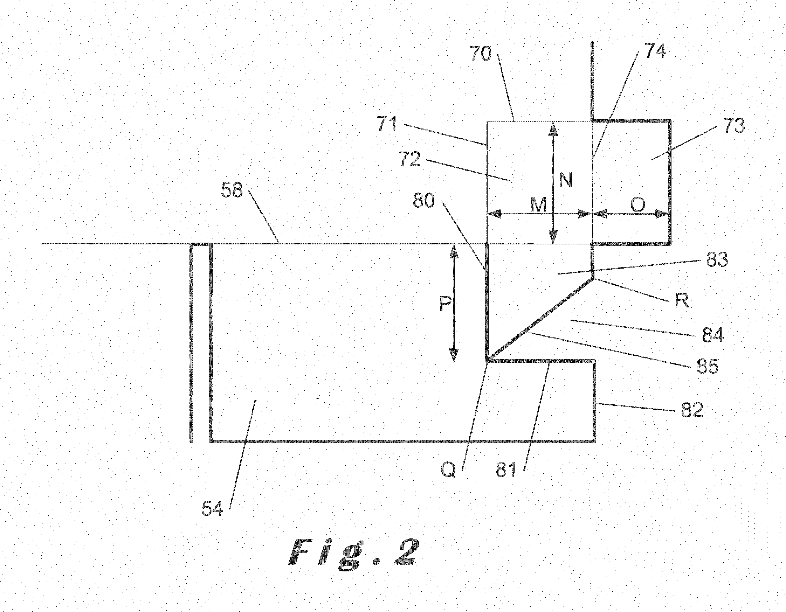

Referring now to Fig. 2, an enlarged and more detailed view of a selected part of blank 10 of Figure 1, is shown.

According to embodiments, in rectangular zone 24, a perforated line 70 is provided, which is substantially parallel or parallel to said score line 58. Starting from the side opposite score line 33 of rectangular zone 24, said perforated line 70 extends into zone 24 for a distance which is at least 25mm, preferably at least 30mm, more preferably at least 35mm and most preferably at least 40mm. It will further be understood that said perforated line 70 extends into zone 24 for a distance which is at most 80mm, preferably at most 70mm, and most preferably at most 60mm. Typically, perforated line 70 extends into zone 24 for a distance which is in the order of 45-55mm, preferably 50mm. It will be appreciated by the person skilled in the art that said distance coincides with the width M mentioned here below.

In rectangular zone 24, a score line 71 is further provided between score line 58 and said perforated line 70, wherein said score line 71 is preferably positioned orthogonally on said score line 58 and said perforated line 70, thereby defining a substantially rectangular or rectangular tab 72.

In embodiments according to the invention, a first tongue 73 extends from the outward facing lateral side of said tab 72, which first tongue 73 is separated from said tab 72 by a perforated line 74. Perforated line 74 thus marks the transition between said tab 72 and said first tongue 73.

It will thus be understood that said tab 72 is defined by said score line 58, said perforated line 74, said perforated line 70 and said score line 71. In embodiments, said score line 71 is substantially parallel or parallel with said perforated line 74.

In embodiments, said tab 72 has a width M which is at least 25mm, preferably at least 30mm, more preferably at least 35mm and most preferably at least 40mm. It will further be understood that said tab 72 has a width M which is at most 80mm, preferably at most 70mm, and most preferably at most 60mm. Typically, said tab 72 has a width M which is in the order of 45-55mm, preferably 50mm.

In embodiments, said tab 72 has a length N which is at least 20mm, preferably at least 30mm, and most preferably at least 40mm. It will further be understood that said tab 72 has a length N which is at most 90mm, preferably at most 80mm, and most preferably at most 70mm. Typically, said tab 72 has a length N which is in the order of 50-65mm, preferably 60mm.

In embodiments according to the invention, said tab 72 is provided to coincide with first cut-out 63 upon folding the blank 10 and forming the packaging container 11, meaning that both zones or layers formed by first cut-out 63 and tab 72, will be placed or positioned onto or on top of each other when folding the packaging container 11 from said blank 10.

In embodiments, the values for length E and width F of said first cut-out 63 are equal to the values for length N and width M of said tab 72, respectively.

In alternative embodiments, length E may be greater than length N, wherein width F may be equal, greater or smaller than width M.

In preferred embodiments, length E may be smaller than length N, wherein width F may be equal, greater or smaller than width M. Preferably, length E is smaller than length N and width F is smaller than width M, so that the opening defined by the superimposed layers first cut-out 63 and tab 72 is essentially defined by the dimensions of first cut-out 63.

In preferred embodiments, width M of said tab 72 has a value which is smaller than said width B of said second portion 61b and a length N which is smaller than the length (L-C) of said second portion 61b. As a consequence, said second portion 61b and said rectangular zone 24 advantageously have a common glue zone 75 for the purpose of attaching or gluing the part of said second portion 61b around said first cut-out 63 to the inside of rectangular zone 24, further providing strength to the packaging container 11 around the opening defined by the superimposed layers first cut-out 63 and tab 72.

Typically, said first tongue 73 has the same length N as said tab 72.

In embodiments, said first tongue 73 extends over a width O which is at least 10mm, more preferably at least 20mm and most preferably at least 30mm. It will further be understood that said first tongue 73 extends over a width O which is at most 70mm, preferably at most 60mm, and most preferably at most 50mm. Preferably, said width O is 40mm.

In embodiments according to the invention, said lower flap 54 contains a cut line 80, which cut line 80 is an extension of or lies in extension with said score line 71.

Starting from score line 58, said cut line 80 extends into lower flap 54 for a distance or length P to an endpoint Q, which length P is at least 20mm, preferably at least 30mm, and most preferably at least 40mm. It will further be understood that said cut line 80 extends into lower flap 54 for a distance which is at most 100mm, preferably at most 90mm, and most preferably at most 80mm. Typically, said cut line 80 extends into lower flap 54 for a distance which is in the order of 50-70mm, preferably 60mm.

In embodiments according to the invention, said lower flap 54 further contains a cut line 81 extending from said point Q, parallel with score line 58, to the side 82 of said lower flap 54, which side 82 is itself an extension of or lies in extension with said perforated line 74.

Thus, a second tongue 83 is obtained defined by said score line 58, said cut line 80, said cut line 81 and said side 82 of said lower flap 54.

In embodiments according to the invention, said second tongue 83 contains a second cut-out 84 for the purpose of creating said dispensing opening. Preferably, said second cut-out 84 has a substantially triangular or triangular shape. In embodiments, said triangular second cut-out 84 is formed by said cut line 81, said side 82 of said lower flap 54, wherein the hypotenuse 85 of the triangular cut-out 84 is formed by a straight line between endpoint Q and a point R on said side 82, which point R lies at a distance from said score line 58, which distance is at least 10%, preferably at least 20%, and most preferably at least 30% of length P and which distance is at most 80%, preferably at most 70% and most preferably at most 60% of length P.

Preferably, the angle formed by said cut line 80 and by said hypotenuse 85 is rounded, meaning that it has the shape of an arc of a circle. Preferably, the radius of said circle is between 1mm and 20mm, more preferably between 3mm and 10mm.

Preferably, the angle formed by said cut line 80 and by said cut line 81 is rounded, meaning that it has the shape of an arc of a circle. Preferably, the radius of said circle is between 1mm and 20mm, more preferably between 3mm and 10mm.

Preferably, the angle formed by said hypotenuse 85 and by said side 82 is rounded, meaning that it has the shape of an arc of a circle. Preferably, the radius of said circle is between 1mm and 20mm, more preferably between 3mm and 10mm.

It has been found that the use of rounded corners advantageously facilitates the opening and closing of said dispensing opening 90.

By folding the blank 10 in the right order, the recloseable packaging container 11 according to the invention can be assembled.

In an aspect of the invention, there is provided a method for folding said blank 10 into said packaging container 11.

In embodiments, the method for folding the blank 10 comprises the following steps:
a) fold the blank 10 along the score lines 62, 31, 32, 33 so as to form a rectangular cuboid, square cuboid or cube box;
b) glue, or connect otherwise, the outward facing side of said glue flap 61 to the inward facing side of said rectangular zone 24;
c) glue, or connect otherwise, the outward facing side of said reinforcement flap 64 to the inward facing side of said lower flap 54;
d) fold the upper flaps 41-44 along the score lines 45-48, respectively, so as to form the top closure portion;
e) fold the lower flaps 52 and 54 inwards along score lines 56 and 58, respectively;
f) fold the lower flaps 51 and 53 inwards along score lines 55 and 57, respectively, so as to form the bottom closure portion;
g) provide a connection between at least the lower flaps 51 and 53; and
h) fold said first tongue 73 along perforated line 74 towards the external surface of rectangular zone 21 and glue, or connect otherwise, the inward facing side of said first tongue 73 to outward facing side of said rectangular zone 21.

It will be appreciated that step b) may involve at least gluing said common glue zone 75, meaning gluing or attaching the part of said second portion 61b around said first cut-out 63 to the corresponding inside of rectangular zone 24.

It will be appreciated that in step c), second tongue 83, although part of lower flap 54, is not glued onto the outward facing side of said reinforcement flap 64.

After completing step h), the recloseable packaging container is fully assembled and with the dispensing opening 90 in the closed condition.

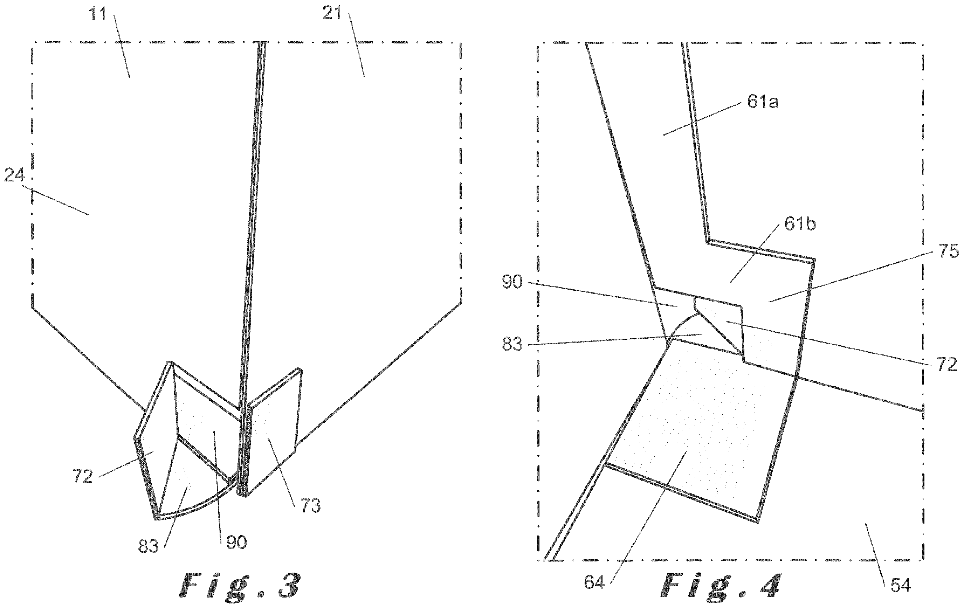

Referring now to Figs. 3 and 4, it will be appreciated that upon full assembly of the container 11, said dispensing opening 90 will be located in a corner of the packaging container 11. More in particular, said corner will be near the bottom closure portion, formed by flaps 51-54, of the container 11, and is thus located in a corner of what would be the bottom of the container 11, when in use.

Upon first use, perforated line 74, linking said tab 72 to said first tongue 73 is irreparably torn apart, thereby physically separating said tab 72 and said first tongue 73. By pulling said tab 72, the ensemble of tab 72 and second tongue 83 essentially pivots around score line 71, thereby revealing said first cut-out 63 and creating a dispensing opening 90 in the container 11, allowing the contents of said container 11 to flow through said created dispensing opening 90.

It will thus be understood that said dispensing opening 90 relates to the opening that is developed when the ensemble of said tab 72 and said second tongue 83 is "pulled out" and essentially rotated around said score line 71. In other words, said dispensing opening 90 is formed by opening an ensemble of a tab 72 which is part of one of said rectangular zones 24 - and which is thus part of a side wall formed by one of said rectangular zones 21-24 - and a second tongue 83 which is part of the lower flap 54 connected to said side wall formed by said rectangular zone 24.

After use, said dispensing opening 90 can be closed by pushing said ensemble of tab 72 and second tongue 83 to their initial position, thus closing off the contents of the packaging container 11. As such, it will be appreciated that said dispensing opening 90 is openable and closeable, and therefore recloseable.

It will further be appreciated that the presence of said second tongue 83 advantageously allows for a better closeable dispensing opening 90 after use of the packaging container 11.

Indeed, firstly, said second tongue 83 is limited in its movement and can only slide in between said reinforcement flap 64 and said lower flap 51. Furthermore, said second tongue 83 disposes of a side, more in particular the side formed between said point R and said score line 58, which essentially abuts said score line 55, thus providing an extra restriction in freedom of movement.

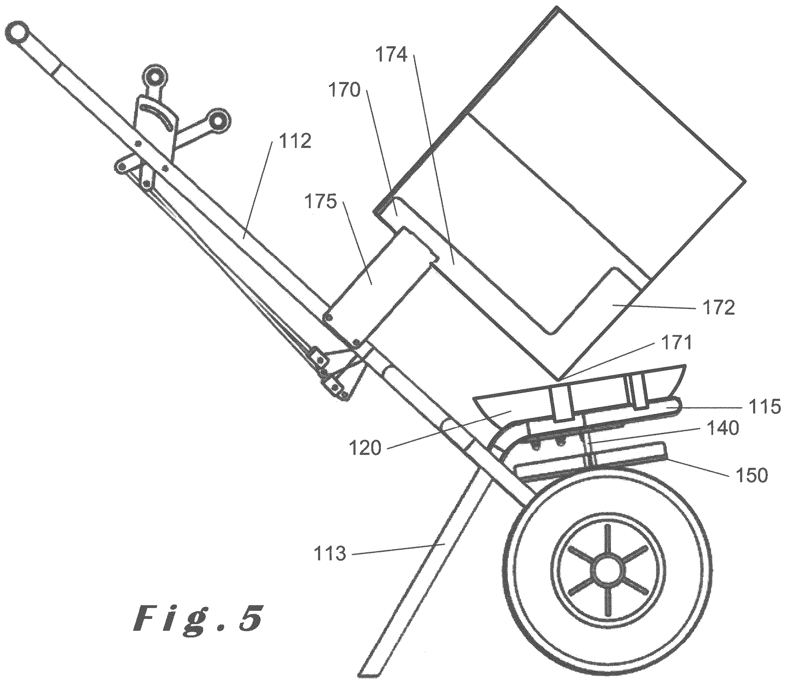

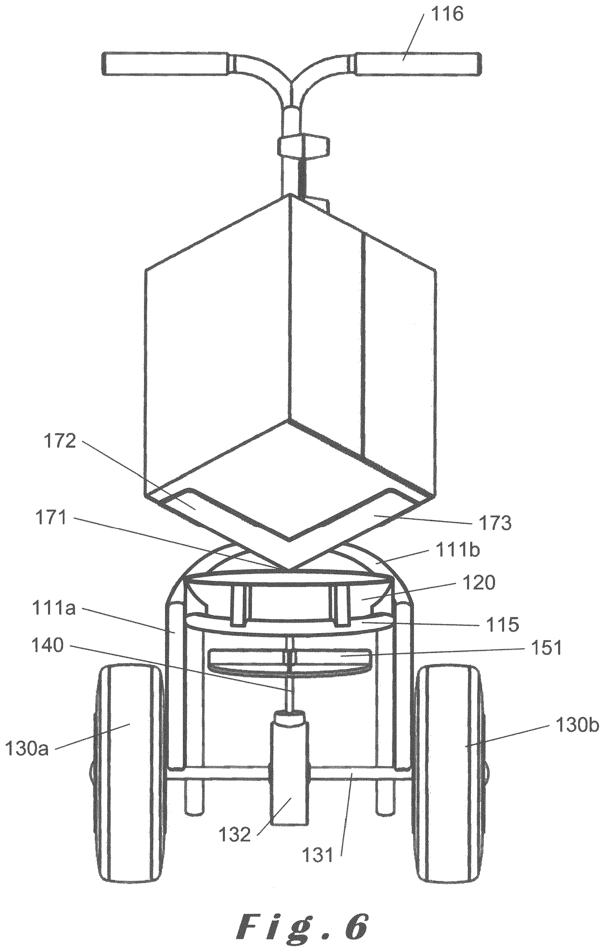

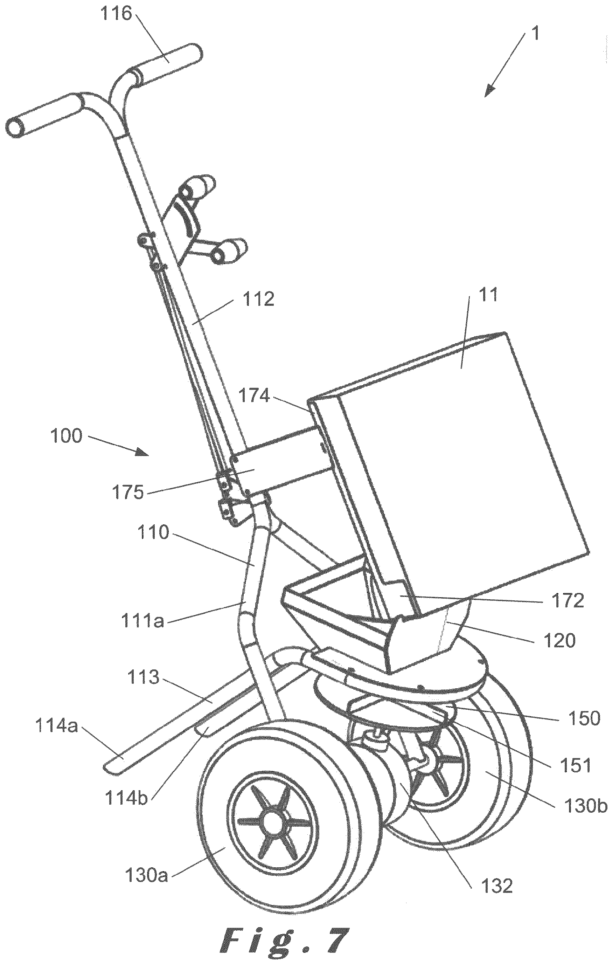

Referring now to Figs. 5-7, a wheeled spreader unit 100 is shown according to the invention.

According to the invention, said wheeled spreader unit 100 comprises a frame 110, mounted on a pair of ground-engaging wheels 130a, 130b. According to embodiments, said frame 110 comprises:
- tubular side members 111a and 111b, wherein the higher part of both members 111a and 111b is attached to the lower part of a tubular bar 112, wherein each one of 111a and 111b is preferably attached to either side of said tubular bar 112;
- said tubular bar 112;
- a central tubular part 113, comprising a lower portion of two legs 114a and 114b for support of the material spreader unit 100 when it is not being advanced or used, said two legs 114a and 114b being connected to each other by a rounded part 115, describing an arc of a circle, said rounded part 115 configured for providing support for a rudimentary base hopper 120.

Each of said tubular side members 111a and 111b is bolted directly onto said central tubular part, thereby forming frame 110. More in particular, each of said tubular side members 111a and 111b is bolted directly, or connected otherwise, to one of said two legs 114a and 114b.

In embodiments according to the invention, said tubular side members 111a and 111b are removably bolted onto said tubular bar 112. In alternative embodiments, said tubular side members 111a and 111b form one permanently connected element with said tubular bar 112. Preferably, said tubular bar 112 is configured to have an upper portion which serves as a handle 116 for the user.

Said tubular side members 111a and 111b are mounted on a pair of ground engaging wheels 130a and 130b. For this purpose, each of said tubular side members 111a and 111b is preferably provided with an aperture (not shown on the figures), respectively, at its lower extremity for accommodating an end of an axle 131. Said axle 131 is thus configured to pass through both apertures provided in said tubular side members 111a and 111b. Alternatively, said tubular side members 111a and 111b may provide the bearings for said axle 131. The axle 131 is further permanently connected to said ground engaging wheels 130a and 130b. During movement of the spreader unit 100, power is transmitted from a rotating axle 131 to a shaft 140, meaning that as the spreader unit 100 is advanced or pushed forward, said shaft 140 will start to rotate, powered by said axle 131. Said shaft 140 thereby preferably rotates in a clockwise direction when said spreader unit 100 is moved in a forward direction. Power is transmitted from said axle 131 to said shaft 140 by use of a means known in the state of the art. Such means for transferring power 132 from said axle 131 to said shaft 140 include a bevel gear or any other type of gear suitable for changing the direction of power transmission.

Said shaft 140 extends from said axle 131, more in particular from said power transferring means 132, upwardly through said base hopper 120, wherein an agitator (not shown on the figures), preferably in the form of a removable split pin or other elongated metal object, is mounted inside said base hopper 120. During movement of the spreader unit 100, and thus during rotation of said axle 131 and said shaft 140, said agitator will also rotate inside said base hopper 120, preferably in a clockwise direction, so that granular material inside said base hopper 120 is directed to at least one hole 121 provided in said base hopper.

An impeller 150, meaning herein a distributor plate, is securely mounted onto said shaft 140, wherein said shaft 140 passes through the centre of said impeller 150. Said impeller is positioned in between said base hopper 120 and said axle 131. Preferably, said impeller 150 is essentially horizontal and/or parallel to the ground, when the spreader unit 100 is in use. Preferably, said impeller 150 is essentially parallel to said base hopper 120. As a consequence of its fixed attachment to the shaft 140, said impeller 150 is configured to rotate collectively with the shaft 140. Preferably, said impeller rotates in a clockwise direction, when said spreader unit 100 is moved in a forward direction.
Preferably, said impeller 150 has a number of fins 151, extending essentially radially from the centre of said impeller 150 to the outside edge of the impeller 150. In embodiments, said impeller 150 has at least two fins 151, preferably at least three fins 151 . In embodiments, said impeller 150 has at most six fins 151, preferably at most 5 fins 151. In preferred embodiments, said impeller 150 has four fins 151.

In embodiments according to the invention, said tubular side members 111a and 111b are further connected by at least one cross brace (not shown on the figures) for providing further stability and strength to the spreader unit 100. Preferably, one cross brace of said at least one cross brace 160 is essentially parallel to said axle 141.

In embodiments according to the invention, said rudimentary base hopper 120 is mounted on said rounded part 115 of said central tubular part 113 and is configured for holding particulate or granular material, which is fed to the hopper 120 from a packaging container 11, and for allowing controlled flow of said particulate or granulate material through at least one hole 121 in the bottom floor of the hopper 120 onto said impeller 150. Typically, said base hopper 120 has the shape of a pan or a bowl and is provided with at least one hole 121.

In preferred embodiments according to the invention, said base hopper 120 is further provided with a control plate (not shown on the figures), for the purpose of controlling the flow of said particulate or granular material through said at least one hole 121 of the base hopper 120. Said control plate 122 is typically located below the base hopper 120. Preferably, control plate 122 is rotatably attached to said shaft 140. In preferred embodiments, said control plate 122 is provided with at least one hole, which coincides with the number and pattern of any of the holes that are present in said base hopper 120. It will be understood that by rotating the control plate 122 with respect to the shaft 140, any opening in the bottom part of the ensemble formed by the base hopper 120 and control plate 122 can be fully opened - when the at least one hole 121 of the base hopper 120 align with the holes present in the control plate 122, thus maximizing the flow of any granular material that is present in the base hopper 120 - but can also be narrowed to a minimum opening - when rotation of the control plate 122 has reduced such openings to a more narrow slit. In preferred embodiments, said tubular bar 112, preferably at or near its handle 116, is provided with a lever for controlling the degree of rotation of said control plate 112, and thus of the openings in said base hopper/control plate 120,122 and, consequently, of the material flow through the hopper 120.

In embodiments according to the invention, a container holder 170 for the purpose of accommodating said packaging container 11, more in particular for receiving and maintaining said recloseable packaging container 11 in a predetermined position, enabling the outflow of said granular material from said dispensing opening 90 when opened, is fixedly mounted onto said tubular bar 112.

Container holder 170 comprises three angle bars connected to each other in a central corner point 171, wherein a first angle bar 172 extends along a first direction X, a second angle bar 173 extends along a second direction Y, and wherein said directions X and Y form an angle of 90°. Furthermore, a third angle bar 174 extends along a third direction Z, which is orthogonal on the plane formed by said directions X and Y. As such, said three directions X, Y and Z form angles of 90° with respect to each other.

Preferably the container holder 170 is made from metal. In embodiments, said third angle bar 174 is substantially parallel to said tubular bar 112, and is attached thereto via a connecting rod 175.

In embodiments, transition zones between two angle bars may comprise a substantially triangular plate 177.

In embodiments, according to the invention, an opening 176 is provided in said container holder 170, preferably in the plane formed by angle bars 174 and 173, being respectively the angle bar which is substantially parallel to said tubular bar 112 and the angle bar that extends essentially to the left from said corner point 171, as can be observed when positioned behind the spreader unit 100, meaning behind or at the side of handle 116, as would be the case when moving or pushing the unit 100 in its regular forward direction.

In preferred embodiments, the container holder 170 is fixedly mounted to said tubular bar 112, such that corner point 171 forms the lowest portion of the container holder. Preferably, said corner point 171 is configured to accommodate the corner of said packaging container 11 wherein said dispensing opening 90 is located.

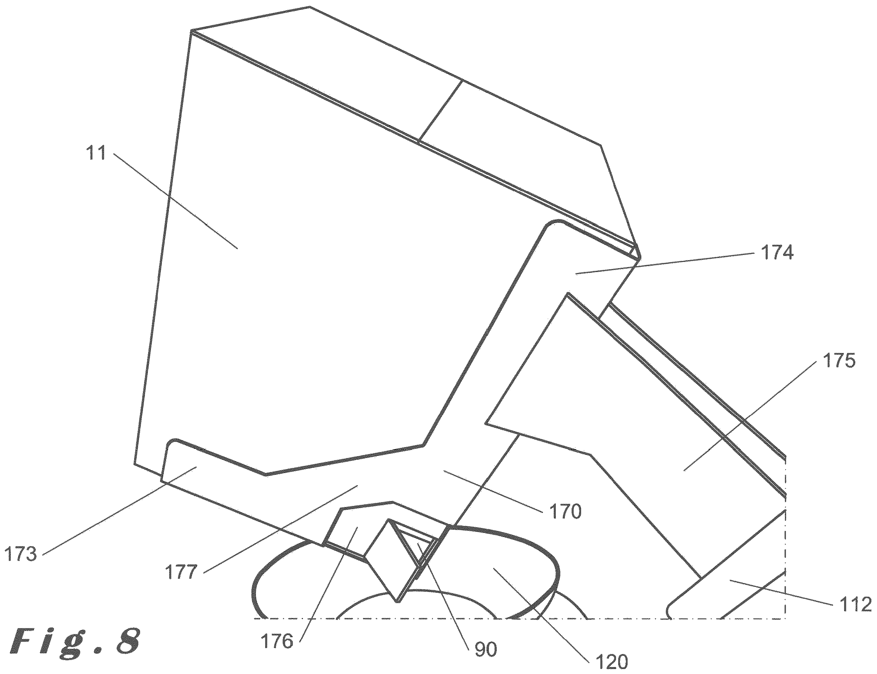

Referring now to Fig. 8, said opening 176 advantageously coincides with the position of the dispensing opening 90 of the packaging container 11, when placed upon the container holder 170 of the spreader unit 100. As a consequence, a packaging container 11 can be placed on the container holder 170, wherein said dispensing opening 90 of the container 11 can be opened and closed unimpededly, while the container 11 remains in position on the container holder 170. Advantageously, excess spreading at the end of a tour with the spreader unit 100 can be avoided.

In preferred embodiments, said container holder 170 is fixedly mounted to said tubular bar 112, such that the lowest corner of the container holder, being corner point 171, is situated at or above the level of plane formed by the top edge or rim of the base hopper 120. Such a position advantageously ensures that a sufficiently large quantity of said granular material can be temporarily held by the base hopper 120.

It is understood that all definitions, preferences, embodiments and preferred embodiments hereinabove, also apply for all further aspects and embodiments, as described below.

In an aspect according to the invention, there is provided a method for spreading a granular material on a surface, wherein said method comprises the following steps:
a) providing a wheeled spreader unit 100, wherein said wheeled spreader unit 100 comprises a container holder 170 for accommodating a packaging container 11, said container holder 170 further having an opening 176;
b) providing a recloseable packaging container 11, having a dispensing opening 90, formed by an ensemble of a tab 72 which is part of one of the side walls 24 of the container 11 and a second tongue 83 which is part of one of the lower flaps 54 of the container 11;
c) placing said recloseable packaging container 11 in said container holder 170 of said spreader unit 100, wherein said dispensing opening 90 coincides with said opening 176;
d) opening said dispensing opening 90 and allowing the outflow of granular material from said packaging container 11 onto a base hopper 120 of said spreader unit 100;
e) pushing the assembly of spreader unit 100 and packaging container 11 forward by use of a handle 116 of the spreader unit 100;
f) allowing granular material to flow from said based hopper 120 onto a impeller 150, which impeller rotates during movement of the spreader unit 100.

In embodiments according to the invention, said method may further comprise a step
g) closing said dispensing opening 90, thereby preventing the further outflow of granular material.

In embodiments according to the invention, said method may further comprise a step
h) removing said closed packaging container 11 from said container holder 170 and storing said closed packaging container 11.

## Claims

1. An assembly (1) for spreading a granular material, the assembly (1) comprising:
- a recloseable packaging container (11) for granular materials, obtained from a blank (10) having a rectangular surface divided in four adjacent rectangular zones (21-24) intended to form the side walls of the container (11), wherein one of the corners of said packaging container (11) is provided with a dispensing opening (90), formed by an ensemble of a tab (72) which is part of a side wall formed by one of said rectangular zones (21-24) and a second tongue (83) which is part of the lower flap (54) connected to said side wall formed by said rectangular zone (24), which dispensing opening (90) is openable and recloseable; and
- a wheeled spreader unit (100), said spreader unit (100) containing:
• a frame (110), mounted on a pair of ground-engaging wheels (130a, 130b);
• a container holder (170) mounted on said frame (110) for receiving and maintaining said recloseable packaging container (11) in a predetermined position, enabling the outflow of said granular material from an opened dispensing opening (90) in said packaging container (11), through an opening (176) in said container holder (170) which opening (176) coincides with the position of said dispensing opening (90) of the packaging container (11), when placed upon the container holder (170);
• a base hopper (120), for collecting said outflow of said granular material and for regulating the flow of granular material via at least one hole (121) in said base hopper (120), said base hopper (120) being positioned below said container holder (170); and
• an impeller (150) for receiving said flow of granular material via said at last one hole (121), said impeller (150) being configured to spread said granular material to the environment.

2. The assembly (1) according to claim 1,
wherein a glue flap (61) extends laterally from the side of rectangular zone 21, said glue flap (61) having a total length L, and further having
a first portion (61a) with a width A and extending along a length C, and
a second portion (61b) adjacent to said first portion (61a), having a width B, wherein B is greater than A;
and
wherein a reinforcement flap (64) extends from the lower side of the second portion (61b) of said glue flap (61), for the purpose of being connected to a lower flap (54) upon folding the packaging container.

3. The assembly (1) according to claim 2,
wherein said second portion (61b) contains a first cut-out (63) for the purpose of creating said dispensing opening (90);
and
wherein said tab (72) is defined in said rectangular zone (24), wherein said first cut-out (63) and said tab (72) will be placed or positioned onto or on top of each other when folding the packaging container (11) from said blank (10),
said tab (72) having a width M and a length N,
wherein said width M has a value which is smaller than said width B of said second portion (61b) and
wherein said length N has a value which is smaller than the length (L-C) of said second portion (61b),
thereby defining a glue zone 75 for the purpose of attaching or gluing the part of said second portion (61b) around said first cut-out (63) to the inside of rectangular zone (24) upon formation of said packaging container (11).

4. The assembly according to claim 1 or claim 2, wherein said second tongue (83) is not connected to the outward facing side of said reinforcement flap (64).

5. The assembly (1) according to any one of claims 2-4, wherein said second tongue (83) in said lower flap (54) is provided to move slidably between reinforcement flap (64) and a lower flap different than lower flap (54).

6. A method for spreading a granular material on a surface, the method comprising the following steps:
a) providing a wheeled spreader unit (100), wherein said wheeled spreader unit (100) comprises a container holder (170) for removably accommodating a packaging container (11), said container holder (170) further having an opening (176);
b) providing a recloseable packaging container (11), having a dispensing opening (90), formed by an ensemble of a tab (72) which is part of one of the side walls of the container (11) and a second tongue (83) which is part of one of the lower flaps 54 of said one of the side walls of the container (11);
c) placing said recloseable packaging container (11) in said container holder (170) of said spreader unit (100), wherein said dispensing opening (90) coincides with said opening (176);
d) opening said dispensing opening (90) and allowing the outflow of granular material from said packaging container (11) onto a base hopper (120) of said spreader unit (100);
e) pushing the assembly of said spreader unit (100) and packaging container (11) forward by use of a handle 116 of the spreader unit (100);
f) allowing granular material to flow from said based hopper (120) onto an impeller (150) which impeller rotates during movement of the spreader unit (100).

7. The method according to claim 6 further comprising the step of
g) closing said dispensing opening (90), thereby preventing the further outflow of granular material.

8. The method according to claim 6 or claim 7 further comprising the step of
h) removing said closed packaging container (11) from said container holder (170) and storing said closed packaging container (11).

9. The method according to any one of claims 6-8, wherein said impeller (150) rotates in a clockwise direction, when said spreader unit (100) is moved in a forward direction.

10. Use of a recloseable packaging container (11) according to any one of claims 1-9 in an assembly with a wheeled spreader unit (100), for spreading a granular material on a surface.
